Europäisches Patentamt

European Patent Office

Office européen des brevets

(19)

(11) Numéro de publication : **0 038 732**
**B1**

(12) **FASCICULE DE BREVET EUROPÉEN**

(45) Date de publication du fascicule du brevet :
25.07.84

(51) Int. Cl.³ : **A 23 J   1/20**, A 23 C   9/146

(21) Numéro de dépôt : **81400526.0**

(22) Date de dépôt : **02.04.81**

(54) **Lait décationisé, procédé de traitement du lait par une résine échangeuse de cations pour la fabrication du lait décationisé, et utilisation du lait décationisé pour la fabrication de la caséine du caillé de lait pour fromages et du lactosérum.**

(30) Priorité : 17.04.80 FR 8008644
31.03.81 FR 8106470

(43) Date de publication de la demande :
28.10.81 Bulletin 81/43

(45) Mention de la délivrance du brevet :
25.07.84 Bulletin 84/30

(84) Etats contractants désignés :
**AT BE CH DE GB IT LI NL SE**

(56) Documents cités :
**EP-A- 0 004 231
CH-A-   288 707
FR-A-   382 072
FR-A- 1 469 793
FR-A- 2 331 963
FR-A- 2 465 422
GB-A-   978 032
Le dossier contient des informations techniques présentées postérieurement au dépôt de la demande et ne figurant pas dans le présent fascicule.**

(73) Titulaire : **LAITERIES E. BRIDEL Société anonyme dite:
B.P. No 5
F-35240 Retiers (FR)**

(72) Inventeur : **Rialland, Jean-Paul
Le Champ Long
F-35240 Retiers (FR)**
Inventeur : **Barbier, Jean-Pierre
Le Pre Noe Noyal S/Seiche
F-35230 St-Erblon (FR)**

(74) Mandataire : **Doan, Dinh Nam et al
Cabinet BEAU DE LOMENIE 55, rue d'Amsterdam
F-75008 Paris (FR)**

Jouve, 18, rue St-Denis, 75001 Paris, France

## 0 038 732

### Description

Les procédés classiques de fabrication de la caséine ou du caillé de lait pour fromages sans présure font intervenir la coagulation de la caséine contenue dans le lait par abaissement du pH dudit lait au point isoélectrique de la caséine qui se situe vers pH 4,6 :

— soit par fermentation lactique du lait, ce qui nécessite l'entreposage de volumes importants de lait pendant toute la durée de la fermentation, qui peut atteindre 12 à 16 heures,

— soit par acidification du lait par addition d'un acide minéral ou organique fort (acide chlorhydrique, acide sulfurique, acide lactique entre autres), pour abaisser le pH dudit lait au point isoélectrique de la caséine de lait, auquel se produit la coagulation de la caséine contenue dans ce lait, ce qui conduit à une caséine de qualité mais également à un volume important de lactosérum acide et fortement minéralisé, difficile à valoriser en l'état, et nécessitant le plus souvent un traitement supplémentaire de déminéralisation par échange d'ions ou par électrodialyse ; de plus, ce traitement brutal du lait par un acide fort, risque de dénaturer ou de dégrader certains produits de valeur contenus dans le lait à traiter,

— soit par passage du lait à travers une couche de résine échangeuse de cations sous forme acide pour remplacer les cations contenus dans le lait par des ions hydrogène et précipiter la caséine du lait sur les particules de ladite résine, ce qui conduit à l'obtention d'une caséine de qualité et d'un lactosérum de bonne valeur nutritive, mais la précipitation de la caséine sur les particules de résine provoque très rapidement l'inactivation de ladite résine.

Afin de remédier à cet inconvénient, selon un procédé récent décrit dans la demande de brevet européen publiée sous le N° 0004231, on a proposé d'opérer en deux étapes :

— dans une première étape, on met le lait en contact avec une résine échangeuse de cations pour abaisser le pH du lait jusqu'à une valeur supérieure au point isoélectrique de la caséine du lait, par exemple à un pH non inférieur à 4,7 et notamment compris entre 4,9 et 5, de manière à éviter toute floculation de la caséine du lait susceptible de provoquer l'emprisonnement des grains de résine échangeuse par la caséine floculée ;

— dans une seconde étape, on acidifie le lait ainsi traité par addition d'un acide dilué jusqu'à l'obtention d'un pH de 4,6, qui est le point isoélectrique de la caséine du lait pour coaguler cette caséine que l'on récupère.

Toutefois, l'addition dans la seconde étape d'un acide pour acidifier le lait, outre qu'elle représente un grand risque de corrosion pour le matériel de fabrication, conduit à un lactosérum acide encore fortement minéralisé, nécessitant pour sa commercialisation une déminéralisation totale ou partielle onéreuse.

Par ailleurs, selon une autre proposition décrite dans la demande de brevet français publiée sous le N° 2 331 963, on concentre le lait écrémé par ultrafiltration, pour obtenir un concentrat de lait et un ultrafiltrat de lait (ou liquide de filtration), puis on précipite la caséine du concentrat de lait par addition de l'ultrafiltrat, dont le pH a été préalablement abaissé par échange de cations au-dessous de la valeur normale de 4,3-4,8, par exemple entre 1 et 2,5.

Le concentrat de lait est un lait enrichi en caséine et en protéines solubles (jusqu'à 17-19 g pour 100 g de concentrat de lait contre 3 à 3,2 g pour 100 g de lait normal).

L'ultrafiltrat de lait contient essentiellement les éléments solubles du lait, c'est-à-dire le lactose, les sels minéraux solubles (0,45-0,48 g pour 100 g d'ultrafiltrat), et les substances azotées non protéiques (0,12 g-0,18 g pour 100 g d'ultrafiltrat). C'est un « lactosérum » dépourvu de substances azotées protéiques.

Du fait que l'ultrafiltrat du lait ne contient pas de caséine ni de substances azotées protéiques, il n'y a pas de précipitation de ces matières sur les particules de résine échangeuse de cations pendant le traitement dudit ultrafiltrat par la résine échangeuse de cations.

Toutefois, la concentration du lait par ultrafiltration nécessite la mise en œuvre d'une technique coûteuse en investissements et en frais d'exploitation pour obtenir un concentrat de lait, qui peut avoir la composition du fromage égoutté et à partir duquel on peut préparer des fromages sans avoir recours au stade technologique d'égouttage.

Si, pour coaguler la caséine du concentrat de lait, il fallait y réintroduire une quantité importante d'ultrafiltrat de lait (dont on avait du mal à se défaire) après abaissement de son pH au moyen d'une résine échangeuse de cations, tout le bénéfice que l'on pouvait attendre de la concentration par ultrafiltration se trouverait annulé.

De plus, le rendement en caséine par rapport au poids de liquides (concentrat de lait + ultrafiltrat de lait) mis en œuvre est peu important étant donné que le volume de liquides mis en œuvre est plus du double du volume du concentrat de lait et que seul le concentrat de lait contient la caséine à coaguler.

Or, les inventeurs ont constaté qu'en mettant en contact du lait avec une résine échangeuse de cations sous forme acide, on pourrait abaisser le pH du lait jusqu'au point isoélectrique de la caséine du lait (pH 4,6) ou au-dessous de ce point isoélectrique sans provoquer la coagulation de la caséine contenue dans ce lait, si l'on maintenait le mélange lait-résine échangeuse dans un intervalle de températures basses de 0 à 4 °C, alors qu'à la température ordinaire ou aux températures moyennement élevées, la coagulation de la caséine du lait a lieu dès que le point isoélectrique de la caséine est atteint.

2

0 038 732

De plus, les inventeurs ont également découvert qu'en abaissant le pH du lait à un pH inférieur ou égal à 3,8, en opérant dans l'intervalle de températures de 0 à 4 °C et en utilisant les résines échangeuses de cations sous forme acide, on obtient un lait décationisé, c'est-à-dire débarrassé en grande partie des cations calcium, sodium, potassium, ayant une teneur en éléments minéraux inférieure à 4 g/litre, avec un rapport Ca/P inférieur à 0,5, un pH inférieur ou égal à 3,8, c'est-à-dire nettement inférieur au point isoélectrique de la caséine (alors que le pH du lait normal est de 6,7), et contenant la totalité des matières azotées protéiques et du lactose du lait normal ; ce lait décationisé, acidulé, présente la particularité de pouvoir être conservé sans précautions particulières pendant plusieurs jours à une température supérieure à 4 °C, par exemple à la température normale (il n'est donc pas nécessaire de la conserver à 0-4 °C) sans qu'il se produise de coagulation de la caséine qu'il contient, ni de développement microbien.

De même, on peut avantageusement utiliser ce lait décationisé acidulé pour acidifier du lait normal et l'amener au pH désiré.

Plus particulièrement, on peut l'utiliser pour acidifier de façon ménagée du lait normal non traité et amener le pH des deux laits au point isoélectrique de la caséine du lait pour provoquer la coagulation de la caséine contenue à la fois dans l'un et l'autre lait en vue de l'obtention de la caséine acide ou du caillé acide pour fromages sans présure, et du lactosérum, ce qui représente un avantage économique appréciable du fait que le traitement à la résine échangeuse de cations peut être limité à une fraction seulement du lot de lait destiné à la fabrication de la caséine ou du caillé.

La présente invention a donc pour objet un lait décationisé, acidulé, ayant un rapport Ca/P inférieur à 0,5, remarquable en ce qu'il contient les mêmes teneurs en matières protéiques et en lactose que celles du lait ordinaire, une teneur en éléments minéraux inférieure à 4 g/litre et en ce qu'il a un pH inférieur ou égal à 3,8.

La présente invention a également pour objet un procédé de traitement du lait au moyen d'une résine échangeuse de cations sous forme acide, en vue de la préparation d'un lait décationisé acidulé, sans addition d'acide minéral ou organique fort ; ce procédé comporte la mise en contact du lait avec une résine échangeuse de cations sous forme acide, à une température de 0 à 4 °C, de préférence de 0 à 2 °C, pendant la durée nécessaire pour abaisser le pH dudit lait à une valeur inférieure ou égale à 3,8, de préférence comprise entre 1,5 et 3,5, suivie de la séparation du lait décationisé acidulé obtenu de la résine échangeuse.

Une durée de mise en contact de 1 à 10 minutes est en général suffisante pour que le pH désiré soit atteint ; cette durée de mise en contact pourra être davantage réduite si l'on maintient le lait et la résine sous agitation ; le rapport en volume du lait traité à la résine échangeuse est de préférence de 5 : 1 à 15 : 1.

Comme résines échangeuses, on peut utiliser les résines échangeuses de cations sous forme acide, de type classique, utilisées en déminéralisation classique, incluant celles utilisées pour la déminéralisation du petit lait.

En particulier, on peut utiliser selon l'invention les résines échangeuses de cations fortement acides, à squelette polystyrénique, portant des groupements acides sulfoniques, présentées sous forme de gels ou de solides macroporeux (billes, bâtonnets, etc...).

Les résines de type macroporeux sont préférées aux résines du type gel en raison de leur résistance mécanique meilleure.

Les résines cationiques fortement acides à squelette polystyrénique à groupements acides sulfoniques sont commercialisées sous les marques suivantes :

« Duolite » [®] de Diaprosim-Diamond
« Amberlite » [®] de Rohm et Haas
« Lowatit » [®] de Bayer
« Kastel » [®] de Montedison
« Dowex » [®] de Dow Chemical
« Relite » [®] de Residion
« Zerolit » [®] de Permutit

Les résines cationiques fortement acides, à structure macroporeuse suivantes sont préférées :
— « Duolite C 26 » [®] (copolymère styrène-divinylbenzène à groupements acides sulfoniques ; billes de granulométrie 0,3 à 1,2 mm ; densité apparente 0,85 kg/l).
— « Amberlite 200 » [®] et « Amberlite 252 » (copolymère styrène-divinylbenzène à groupements acides sulfoniques ; densité apparente 0,80 kg/l ; granulométrie 0,4-0,5 mm).
— « Lewatit SP 112 » [®] (polystyrène à groupements acides sulfoniques ; billes de granulométrie 0,3-1,5 mm ; densité apparente 0,70-0,80 kg/l).
— « Kastel C 300 P » [®] et « Kastel 300 AGRP » (copolymère styrène-divinylbenzène à groupements acides sulfoniques ; billes de granulométrie 0,3-1,2 mm ; densité apparente 0,84-0,86 kg/l).
— « Dowex MSC-1 » [®] (copolymère styrène-divinylbenzène sulfoné ; billes de granulométrie 0,29-0,84 mm ; densité apparente 0,80 kg/l).

Le traitement du lait par la résine échangeuse de cations peut être réalisé par des techniques connues en soi, soit par percolation du lait à travers un lit fixe de résine échangeuse de cations, soit par

3

passage du lait à contre-courant avec la résine échangeuse de cations, soit par agitation mécanique ou pneumatique du mélange lait-résine échangeuse de cations, soit par tout autre procédé convenable.

Après saturation de la résine échangeuse de cations par les cations du lait, il est procédé à une régénération de ladite résine échangeuse par un acide. Après rinçage de la résine échangeuse ainsi régénérée avec de l'eau décationisée, la résine échangeuse régénérée est prête pour un nouveau cycle de traitement.

La présente invention a également pour objet l'utilisation du lait décationisé acidulé selon l'invention pour l'acidification du lait en vue de la préparation des laits acidifiés, de la caséine, du caillé acide pour fromages sans présure, et du lactosérum.

Pour la préparation des laits acidifiés, on mélange le lait décationisé acidulé avec le lait normal jusqu'à l'obtention du pH désiré.

Pour la préparation de la caséine dde lait, et du lactosérum, on mélange le lait décationisé acidulé avec une quantité de lait normal non traité, suffisante pour élever le pH du mélange jusqu'au voisinage du point isoélectrique de la caséine du lait, suivi du réchauffage du mélange ainsi obtenu à une température de 10 à 60 °C, pour coaguler la caséine contenue à la fois dans le lait traité et dans le lait non traité et on récupère la caséine ainsi coagulée et le lactosérum ainsi obtenu.

Plus particulièrement, on mélange le lait décationisé acidulé avec un certain volume de lait normal, non traité (de préférence un volume égal à celui du lait décationisé) pour élever le pH du mélange à un pH de 4,4-4,6 et on réchauffe le mélange ainsi obtenu à une température de 40 à 50 °C pour provoquer la coagulation de la caséine contenue dans ledit mélange.

Cette caséine coagulée est séparée du lactosérum puis lavée à l'eau, essorée et séchée selon les procédés traditionnels (séchage par atomisation, ou par air chaud en lit fluidisé) ou bien remise en suspension dans l'eau chaude, de préférence à 75 °C et transformée en caséinates de métaux alcalins ou alcalino-terreux (sodium, potassium, calcium) ou en caséinate d'ammonium.

Le lactosérum récupéré (qui ne contient que les cations apportés par le lait non traité) peut alors être séché en l'état ou après neutralisation ou bien subir toute opération technologique habituelle telle que déminéralisation, ultrafiltration, concentration par osmose inverse.

Le lactosérum obtenu selon le procédé de la présente invention présente une teneur réduite en éléments minéraux, une teneur faible en chlorures comparativement au lactosérum issu de la fabrication traditionnelle, et les rapports des éléments minéraux suivants :

| | lait normal | lactosérum doux | lactosérum acide | lactosérum selon l'invention. |
|---|---|---|---|---|
| $\frac{Ca}{P}$ | $> 1$ | $\gg 1$ | $\gg 1,5$ | $< 1$ |
| $\frac{K}{P}$ | $\gg 1,5$ | $\gg 2,5$ | $> 2,0$ | $< 1,3$ |
| $\frac{P}{Cl}$ | $< 0,85$ | $< 0,6$ | $< 0,3$ | $> 0,6$ |

Il est remarquable que ce lactosérum concentré par ultrafiltration ou non possède de bonnes propriétés de foisonnement et en tous les cas supérieures à celles d'un lactosérum de caséine obtenu par acidification directe et ce, autant sur le volume après battage que sur la texture.

Par ailleurs, pour l'utilisation du lait décationisé acidulé selon l'invention pour la préparation du caillé acide pour fromages sans présure, notamment du « cottage cheese », — on mélange le lait décationisé acidulé avec du lait normal non traité en quantité suffisante pour élever le pH du mélange jusqu'au voisinage du point isoélectrique de la caséine du lait, — on réchauffe le mélange ainsi obtenu à une température de 10 à 60 °C pour coaguler sous forme de caillé la caséine contenue à la fois dans le lait décationisé acidulé et dans le lait normal non traité, — on découpe le caillé formé, on le soumet à une cuisson à une température comprise entre 48 et 60 °C, on soutire le lactosérum que l'on récupère, on lave le caillé à l'eau froide puis on l'égoutte à fond.

Plus particulièrement, on mélange le lait décationisé acidulé avec du lait normal non traité, préalablement refroidi à une température de 0 à 4 °C, en quantité suffisante (de préférence un volume égal à celui du lait décationisé) pour élever le pH du mélange à une valeur de 4,4-4,8, de préférence 4,4-4,6, puis on réchauffe le mélange à une température de 30 à 35 °C pour coaguler le caillé.

On peut ainsi réaliser par le procédé selon l'invention ci-dessus décrit, notamment les types de fromages dénommés comme suit : « cottage cheese », « queso blanco », « quark », « cheddar-like cheese », « ricotta », « Blue cheese », et fromage pour pizza.

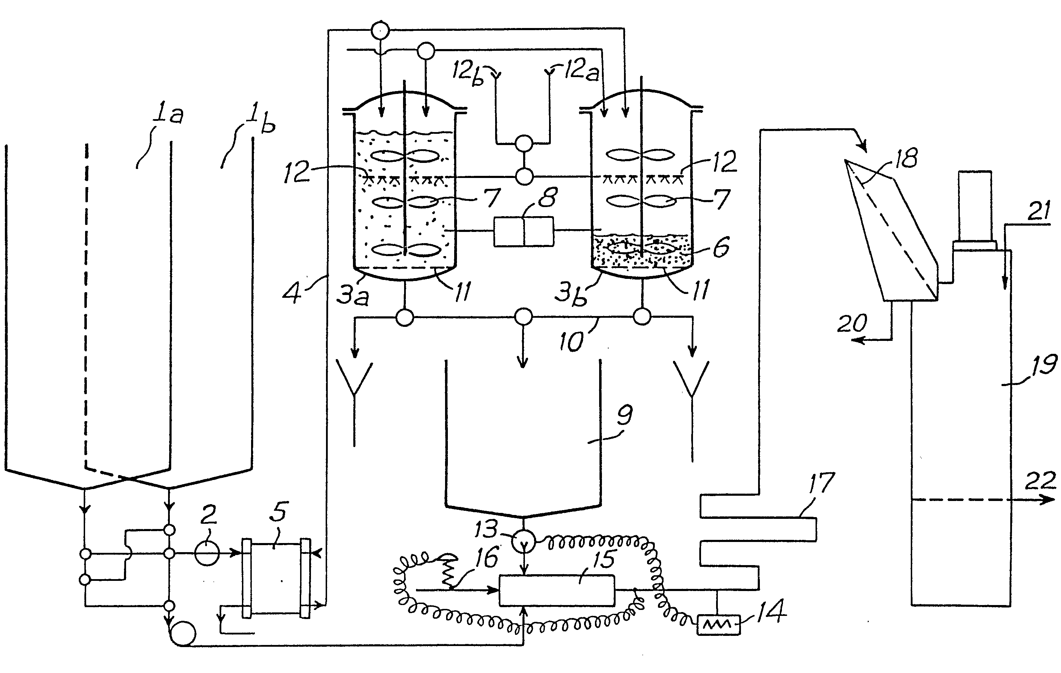

On décrira l'invention dans ce qui suit en référence au dessin ci-joint sur lequel la figure unique

4

représente de façon schématique une installation industrielle pour la mise en œuvre du procédé selon l'invention.

Si l'on se reporte à cette figure unique, du lait écrémé est stocké dans deux cuves (1a) et (1b). De l'une de ces cuves, le lait est transporté par une pompe (2) dans l'un des deux réacteurs (3a) (3b) via la conduite (4) après refroidissement à une température inférieure à 4 °C dans l'échangeur thermique (5) par un liquide cryogénique. Dans le réacteur (3a) ou (3b), le lait est mis au contact d'une résine cationique fortement acide (6) (sous forme de billes) sous agitation suffisante assurée par des agitateurs (7) pour maintenir les billes de résine en suspension dans le lait. Lorsque le pH mesuré au pHmètre (8) atteint la valeur désirée (généralement inférieure à 3,5) le lait décationisé acidulé est transféré dans le récipient de stockage (9) par simple gravité ou par pression d'air, via la conduite 10 ; les billes de résine sont retenues dans le réacteur (3a) ou (3b) par un tamis (11) placé à la partie inférieure du réacteur. Après rinçage à l'eau admise en 12a du lait retenu entre les billes de résine, celles-ci sont régénérées par une solution d'acide chlorhydrique diluée introduite en 12b, puis rincées à l'eau par l'intermédiaire d'une rampe de dispersion (12). Pendant cette régénération, le lait est traité sur le second réacteur.

Le lait décationisé acidulé stocké dans le réservoir (9) est mélangé dans la tête de coagulation (15) au lait non traité stocké dans la cuve (1a) ou (1b) éventuellement après refroidissement dans l'échangeur thermique 5, en proportion telle que le pH soit compris entre 4,4 et 4,6. Le volume de lait décationisé est délivré en fonction de la consigne pH par une pompe à débit variable (13) asservie au pHmètre (14). La coagulation se produit dans la tête de coagulation (15) par injection directe de vapeur régulée en 16. Après le chambrage réalisé en (17), le produit obtenu est récupéré. Pour la préparation de la caséine, la caillebotte est séparée du lactosérum par un filtre (18) placé à l'entrée d'une première cuve de lavage (19). Le lactosérum est récupéré en 20, en vue du traitement ultérieur alors que la caillebotte est lavée par de l'eau amenée par (21) puis évacuée par une conduite (22) vers une seconde tour de lavage non représentée.

Les exemples suivants sont donnés pour illustrer la mise en œuvre du procédé de l'invention dans l'installation ci-dessus décrite.

Exemple 1

Préparation du lait décationisé.

10 volumes de lait écrémé refroidi à 2 °C sont mélangés sous agitation à un volume de résine échangeuse de cations, fortement acide (forme H$^+$) commercialisée sous le nom de « Duolite C 26 » [R] (copolymère de styrène-divinylbenzène sulfoné, à structure macroporeuse), présentée sous forme de billes de 0,3 à 1,2 mm. Au bout de cinq minutes, on sépare le lait de la résine que l'on lave à l'eau et régénère par une solution d'acide chlorhydrique à 10 % ; le lait décationisé ainsi recueilli est soumis à l'analyse et répond à la composition suivante :

| Composition | Lait de départ | Lait décationisé |
|---|---|---|
| Matière sèche, g/l | 92,3 | 84,5 |
| Matière azotée totale, g/l | 34,8 | 32,0 |
| Caséine, g/l | 27,2 | 26,3 |
| Matières minérales, g/l | 7,9 | 3,2 |
| pH | 6,7 | 2,3 |
| Calcium, g/l | 1,15 | 0,15 |
| Potassium, g/l | 1,48 | traces |
| Sodium, g/l | 0,45 | traces |
| Chlorures, g/l | 2,15 | 1,8 |
| Phosphore, g/l | 1,05 | 1 |

Le lait décationisé est caractérisé par une teneur fortement réduite en matières minérales et un pH nettement inférieur au point isoélectrique de la caséine du lait (3,2 g/l de matières minérales contre 7,9 g/l pour le lait de départ ; pH 2,3 contre pH 6,7 pour le lait de départ).

Le lait décationisé ne présente plus la couleur blanche et l'opacité du lait normal ; il se présente comme un liquide jaune verdâtre translucide.

Ce lait décationisé ne présente pas de sédiments visibles après un stockage de 48 heures à la température ambiante. Préparation de la caséine :

10 volumes de lait écrémé non traité sont mélangés au lait décationisé ainsi recueilli. Dès que le pH du mélange a atteint la valeur 4,4 à 4,6, le mélange est réchauffé à 45 °C par injection directe de vapeur pour coaguler la caséine du lait. La caillebotte est séparée du lactosérum par filtration. Après lavage à

**0 038 732**

l'eau, la caillebotte est essorée, puis remise en suspension dans de l'eau à 75 °C et neutralisée par une solution aqueuse de soude à 10 % jusqu'à un pH final de 6,6. La solution de caséinate ainsi obtenue est exempte de toute impureté. Après séchage par atomisation on obtient une poudre blanche de caséinate de sodium, au goût neutre et franc. La caillebotte lavée et le caséinate de sodium sont soumis à l'analyse, ainsi que le lactosérum recueilli.

| Compositions | Lactosérum de caséine | Caillebotte lavée | Caséinate en poudre |
|---|---|---|---|
| | | | (en poids) |
| Matière sèche | 63 g/l | 45 % | 95,5 % |
| Matières azotées totales | 7,25 g/l | 43,6 % | 89,8 % |
| Matières minérales | 4,65 g/l | 0,9 % | 3,6 % |
| pH | 4,5 | | 6,6 |
| Calcium | 0,68 g/l | | |
| Potassium | 0,75 g/l | | |
| Sodium | 0,23 g/l | | |
| Chlorures | 1,85 g/l | | 1,3 % |
| Lactose | | 0,1 % | 0,2 % |
| Phosphore | 0,85 g/l | | |

Exemple 2

Préparation du lait décationisé.

1 volume de résine cationique sous forme H⁺ « Duolite C 26 » ® (résine cationique à squelette polystyrénique à groupements fonctionnels sulfoniques présentée sous forme de billes de 0,3 à 1,2 mm), est placé dans une colonne à double paroi, thermostatée à 2 °C ; 10 volumes de lait refroidi à 2 °C sont décationisés par passage à contre-courant, au travers de la résine, à un débit de 5 volumes/heure. Le lait décationisé est recueilli. L'analyse de ce lait donne la composition suivante :

| Composition | Lait de départ | Lait décationisé |
|---|---|---|
| Matière sèche g/l | 92,1 | 84,0 |
| Matières azotées totales g/l | 34,6 | 32,1 |
| Caséine g/l | 27,0 | 26,1 |
| Matières minérales g/l | 8,25 | 3,5 |
| pH | 6,7 | 2,4 |
| Calcium g/l | 1,15 | 0,12 |
| Potassium g/l | 1,50 | traces |
| Sodium g/l | 0,48 | traces |
| Phosphore g/l | 1,05 | 0,95 |

Le lait décationisé est caractérisé par une teneur réduite en matières minérales (3,5 g/l contre 8,25 g/l pour le lait non traité) et par un pH inférieur au point isoélectrique de la caséine du lait (pH 2,4 contre pH 6,7 pour le lait non traité).

Préparation de la caséine.

1 volume de lait décationisé est mélangé à 1 volume de lait non traité. Le pH du mélange est de 4,5. Ce mélange est réchauffé entre 30 et 60 °C (50 °C dans cet exemple) pour agglomérer la caséine. La caillebotte est séparée du lactosérum puis lavée et essorée.

La mise en œuvre de 10 litres de lait non traité et de 10 litres de lait décationisé a donné 1,600 kg de caillebotte de composition suivante ; la composition du lactosérum recueilli est également donnée ci-après ainsi que la composition d'un sérum issu de la fabrication traditionnelle de la caséine par acidification par l'acide chlorhydrique, donnée à titre comparatif :

6

# 0 038 732

| Composition | Caillebotte lavée | Lactosérum | Sérum chlorhydrique |
|---|---|---|---|
| Matière sèche | 35 % | 64 g/l | 60-65 g/l |
| Matière azotée | 33,3 % | | |
| Matières azotées totales/matière sèche | 95 % | 11,6 % | 10,5-11,5 % |
| Cendres/matière sèche | 2,5 % | 7,25 % | 10,5-12 % |
| Lactose | 0,25 % | | |
| Matière grasse | 0,50 % | | |
| Chlorures/matière sèche (en NaCl) | | 2,9 % | 7-7,5 % |
| Calcium/matière sèche | | 1,2 % | 1,6-2 % |
| Potassium/Matière sèche | | 1,65 % | 2,4-2,6 % |
| Sodium/Matière sèche | | 0,55 % | 0,7-0,9 % |
| pH | | 4,5 | 4,4-4,6 |
| Phosphore/Matière sèche | | 1,3 % | 1-1,3 % |

Le rendement en caséine à 10 % d'eau par 100 litres de lait est de 3,1 kg ; le rendement en litres de lait par kg de caséine à 10 % d'eau est de 32.

Le lactosérum obtenu présente une minéralisation faible (7,25 % de cendres contre 10,5-12 % pour le sérum chlorhydrique) avec en particulier une faible teneur en chlorures (2,9 % de chlorures contre 7-7,5 % pour le sérum chlorhydrique).

Exemple 3

Préparation du lait décationisé.

1 volume de résine cationique sous forme H⁺ « Duolite C 26 » ® est placé dans une colonne à double paroi, thermostatée à 2 °C ; 10 volumes de lait refroidi à 2 °C sont décationisés par passage, à co-courant, au travers de la résine à un débit de 5 volumes/heure. Le lait décationisé est recueilli. L'analyse de ce lait donne la composition suivante :

| | Lait de départ | Lait décationisé |
|---|---|---|
| Matière sèche, g/l | 92,6 | 84,4 |
| Matières azotées totales, g/l | 35,1 | 31,6 |
| Caséine, g/l | 27,2 | 25,5 |
| Matières minérales, g/l | 7,7 | 3,1 |
| pH | 6,7 | 2,2 |
| Calcium, g/l | 1,17 | 0,24 |
| Potassium, g/l | 1,51 | 0,03 |
| Sodium g/l | 0,44 | traces |
| Phosphore g/l | 1,02 | 0,96 |

Ce lait décationisé est caractérisé par une teneur réduite en matières minérales (3,1 g/l contre 7,7 g/l pour le lait non traité) et par un pH inférieur au point isoélectrique de la caséine du lait (pH 2,2 contre pH 6,7 pour le lait non traité).

Préparation de la caséine.

1 volume de lait décationisé est mélangé à un volume de lait non traité pour amener le pH du mélange à 4,4. Ce mélange est alors réchauffé à 45 °C pour la coagulation de la caséine.

La caillebotte est séparée du lactosérum puis lavée et essorée.

Le lactosérum recueilli est analysé et comparé à un sérum issu de la fabrication traditionnelle de la caséine par acidification du lait par l'acide chlorhydrique.

7

| Composition | Sérum chlorhydrique | Lactosérum recueilli |
|---|---|---|
| Matière sèche, g/l | 60-65 | 63,5 |
| Matière azotée/matière sèche % | 10,5-11,5 | 11,2 |
| pH | 4,4-4,6 | 4,4 |
| Cendres/matière sèche % | 10,5-12 | 7,65 |
| Chlorures/matière sèche (en NaCl) % | 7,0-7,5 | 2,85 |
| Calcium/matière sèche % | 1,6-2,0 | 1,24 |
| Potassium/matière sèche % | 2,4-2,6 | 1,16 |
| Sodium/matière sèche % | 0,7-0,9 | 0,35 |
| Phosphore/matière sèche % | 1-1,3 | 1,35 |

Le lactosérum recueilli est faiblement minéralisé (7,65 % de cendres contre 10,5-12 % pour le sérum chlorhydrique) et contient peu d'ions chlorures (2,85 % de chlorures contre 7 à 7,5 % pour le sérum chlorhydrique).

Exemple 4

Préparation du lactosérum neutralisé.

Les lactosérums obtenus dans les exemples ci-dessus sont neutralisés pour les amener dans une zone de pH comprise entre 5,5 et 6,5. La composition de ces sérums neutralisés est donnée ci-après :

| | Sérum de l'ex. 1 neutralisé par | | | Sérum de l'ex. 3 neutralisé par | |
|---|---|---|---|---|---|
| | Ca(OH)₂ et NaOH | Ca(OH)₂ | KOH | NaOH | NaOH |
| Matière sèche g/l | 61,0 | 61,7 | 60,8 | 62,9 | 62,7 |
| Matière azotée totale/matière sèche % | 11,6 | 11,5 | 11,5 | 10,1 | 10,5 |
| Matières minérales/matière sèche % | 9,0 | 8,8 | 9,3 | 8,2 | 9,1 |
| pH | 6,15 | 6,0 | 6,2 | 5,8 | 6,4 |
| Acidité ° dornic | 22 | 25 | 20 | 29 | 18 |
| Chlorure/matière sèche % | 2,95 | 2,95 | 2,95 | 2,9 | 2,9 |
| Calcium/matière sèche % | 1,65 | 1,80 | 1,25 | 1,33 | 1,32 |
| Potassium/matière sèche % | 1,31 | 1,30 | 2,25 | 1,40 | 1,40 |
| Sodium/matière sèche % | 0,68 | 0,45 | 0,47 | 0,90 | 1,20 |

Exemple 5

Fabrication de fromages sans présure.

Préparation du lait décationisé.

1 000 litres de lait écrémé pasteurisé refroidi à 2 °C sont mélangés sous agitation à 100 litres de résine échangeuse de cations, fortement acide (forme H⁺) commercialisée sous le nom de « Duolite C 26 » (copolymère de styrène-divinylbenzène sulfoné, à structure macroporeuse) présentée sous forme de billes de 0,3 à 1,2 mm. Au bout de cinq minutes, on sépare le lait de la résine ; on lave celle-ci à l'eau et on la régénère par une solution d'acide chlorhydrique à 10 % ; le lait décationisé ainsi recueilli est soumis à l'analyse et répond à la composition suivante :

| Composition | Lait de départ | Lait décationisé |
|---|---|---|
| Matières sèches , g/l | 92,5 | 84,8 |
| Matières azotées totales g/l | 34,9 | 32,2 |
| Caséine, g/l | 27,3 | 26,5 |
| Matières minérales g/l | 7,9 | 3,2 |
| pH | 6,65 | 2,4 |
| Calcium, g/l | 1,2 | 0,15 |
| Potassium, g/l | 1,5 | traces |
| Sodium, g/l | 0,45 | traces |
| Chlorures, g/l | 2,15 | 1,85 |
| Phosphore, g/l | 1,05 | 1,0 |

Le lait décationisé est caractérisé par une teneur fortement réduite en matières minérales et un Ph nettement inférieur au point isoélectrique de la caséine du lait (3,2 g/l de matières minérales contre 7,9 g/l pour le lait de départ ; pH 2,4 contre 6,65 pour le lait de départ.

Le lait décationisé ne présente plus la couleur blanche et l'opacité du lait normal ; il se présente comme un liquide jaune verdâtre translucide.

Ce lait décationisé ne présente pas de sédiments visibles après un stockage de 48 heures à la température ambiante.

Préparation du caillé acide égoutté.

1 000 litres de lait écrémé pasteurisé refroidi à 2 °C sont mélangés au lait décationisé ainsi recueilli.

Le pH atteint une valeur comprise entre 4,4 et 4,5. Le mélange est réchauffé lentement à 32 °C pour obtenir la coagulation des matières protéiques du lait sous la forme d'un caillé.

Dès que le caillé obtenu présente une fermeté convenable, on procède à son découpage. On laisse au repos pendant 15 minutes environ le caillé découpé puis on procède à sa cuisson. Le caillé est réchauffé très lentement jusqu'à une température comprise entre 52 et 55 °C et maintenu pendant environ 1 heure à cette température, jusqu'à ce que le caillé présente la fermeté désirée.

Après soutirage du lactosérum, le caillé est lavé et refroidi avec de l'eau javellisée (10 mg/litre de chlore libre) acidifiée à pH 5,0, puis égoutté ; on répète les opérations de lavage et d'égouttage à plusieurs reprises, en terminant avec de l'eau glacée (entre 4 et 5 °C).

Le caillé est à nouveau égoutté à fond pour éliminer l'eau excédentaire.

Préparation du fromage.

Le caillé égoutté peut être emballé avec ou sans sel ou peut être crémé et salé de façon connue en soi.

Le produit obtenu présente la texture et le goût des fromages traditionnels du type « cottage cheese ».

Composition du fromage obtenu par le procédé de l'invention.

| | |
|---|---|
| Extrait sec. | 22 % |
| Protéines | 96,00 % par rapport à l'extrait sec |
| Matières minérales | 2,75 % par rapport à l'extrait sec |
| Matières grasses | 0,75 % par rapport à l'extrait sec |
| Lactose | 0,50 % par rapport à l'extrait sec |

(Siehe Tabelle, Seite 10 f.)

| Composition du Lactosérum obtenu par le procédé de l'invention. | | Lactosérum témoin obtenu par acidification à l'acide chlorhydrique,par voie classique | |
|---|---|---|---|
| Matières sèches | 64,75 g/l | 69,30 g/l | |
| Matières azotées | 12,57 % | 12,48% par rapport à la matière sèche | |
| NaCl | 2,90 % | 6,86 % | " |
| Cendres | 7,2 % | 11,00 % | " |
| Calcium | 1,25 % | 1,82 % | " |
| Potassium | 1,46 % | 2,40 % | " |
| Sodium | 0,46 % | 0,75 % | " |
| Magnésium | 0,13 % | 0,17 % | " |

**Revendications** (pour les Etats contractants : BE, CH, DE, GB, IT, LI, NL, SE)

1. Lait décationisé acidulé, ayant un rapport Ca/P inférieur à 0,5, caractérisé en ce qu'il contient les mêmes teneurs en matières protéiques et en lactose que celles du lait ordinaire, une teneur en éléments minéraux inférieure à 4 g/litre et qu'il a un pH inférieur ou égal à 3,8.

2. Procédé de traitement du lait au moyen d'une résine échangeuse de cations sous forme acide, en vue de la préparation du lait décationisé selon la revendication 1, caractérisé en ce qu'il comporte la mise en contact du lait avec la résine échangeuse de cations sous forme acide, à une température de 0 à 4 °C, pendant la durée nécessaire pour abaisser le pH dudit lait à une valeur inférieure ou égale à 3,8, suivie de la séparation du lait décationisé ainsi obtenu de la résine échangeuse.

3. Procédé selon la revendication 2, caractérisé en ce que la mise en contact du lait avec la résine échangeuse de cations est effectuée pendant la durée nécessaire pour abaisser le Ph dudit lait à un pH de 1,5 à 3,5.

4. Procédé selon la revendication 2 ou 3, caractérisé en ce que la résine est une résine échangeuse de cations fortement acide, à squelette polystyrénique portant des groupements acides sulfoniques, à structure de gel, ou à structure macroporeuse.

5. Procédé selon la revendication 2, caractérisé en ce que le rapport en volume du lait traité à la résine échangeuse est de 5 : 1 à 15 : 1.

6. Procédé selon la revendication 2, caractérisé en ce que la mise en contact se fait à une température de 0 à 2 °C.

7. Procédé selon la revendication 2, caractérisé en ce que le lait à traiter est du lait écrémé.

8. Procédé selon la revendication 2, caractérisé en ce que la mise en contact se fait sous agitation ou par percolation, ou à contre-courant.

9. Procédé d'utilisation du lait décationisé, selon la revendication 1, en vue de l'acidification du lait normal, caractérisé en ce que l'on mélange ce lait décationisé acidulé avec le lait normal à traiter jusqu'à l'obtention du pH désiré.

10. Procédé d'utilisation du lait décationisé, selon la revendication 1, en vue de la préparation de la caséine et du lactosérum, caractérisé en ce qu'il comporte le mélange du lait décationisé avec une quantité de lait normal non traité, suffisante pour élever le pH du mélange jusqu'au voisinage du point isoélectrique de la caséine du lait, suivi du réchauffage du mélange ainsi obtenu à une température de 10 à 60 °C, pour coaguler la caséine contenue à la fois dans le lait traité et dans le lait non traité et de la récupération de la caséine ainsi coagulée et du lactosérum ainsi obtenu.

11. Procédé selon la revendication 10, caractérisé en ce que le lait décationisé est mélangé avec une quantité de lait normal non traité, suffisante pour élever le pH du mélange à une valeur de 4,4-4,6.

12. Procédé selon la revendication 10 ou 11, caractérisé en ce que l'on réchauffe le mélange de lait décationisé et de lait non traité à une température de 40 à 50 °C pour coaguler la caséine.

13. Procédé selon la revendication 10 ou 11, caractérisé en ce que le rapport en volume entre la quantité de lait non traité et celle de lait décationisé est de 1 : 1.

14. Procédé selon la revendication 10, caractérisé en ce que la caséine récupérée est lavée à l'eau, essorée puis séchée.

15. Procédé selon la revendication 10, caractérisé en ce que la caséine récupérée est lavée à l'eau, essorée, puis remise en suspension dans de l'eau chaude, de préférence à 75 °C et transformée en caséinate alcalin ou alcalino-terreux ou d'ammonium puis séchée.

16. Procédé selon la revendication 10, caractérisé en ce que le lactosérum récupéré est neutralisé par un hydroxyde alcalin ou alcalino-terreux, puis concentré et finalement séché.

17. Caséine de lait obtenue par le procédé selon l'une des revendications 10 à 15.

18. Lactosérum obtenu par le procédé selon l'une des revendications 10 à 13 et 16.

19. Lactosérum caractérisé en ce qu'il présente une teneur réduite en éléments minéraux, une faible teneur en chlorures comparativement au sérum issu de fabrication traditionnelle et les rapports des éléments minéraux suivants Ca/P < 1 ; K/P < 1,3 et P/Cl ⩾ 0,6.

20. Procédé d'utilisation du lait décationisé selon la revendication 1, en vue de la préparation du caillé acide pour fromages sans présure et du lactosérum, caractérisé en ce qu'il comporte

— le mélange du lait décationisé avec du lait normal non traité, en quantité suffisante pour élever le pH du mélange jusqu'au voisinage du point isoélectrique de la caséine du lait,

— le réchauffage du mélange ainsi obtenu à une température de 10 à 60 °C, pour coaguler sous forme de caillé la caséine contenue à la fois dans le lait décationisé acidulé, et dans le lait non traité, et puis

— le découpage du caillé formé, sa cuisson à une température comprise entre 48 et 60 °C, le soutirage du lactosérum et sa récupération, le lavage du caillé à l'eau froide et l'égouttage dudit caillé.

21. Procédé selon la revendication 20, caractérisé en ce que le lait normal non traité a été préalablement refroidi à une température de 0 à 4 °C.

22. Procédé selon la revendication 20 ou 21, caractérisé en ce que le lait décationisé est mélangé avec une quantité de lait normal non traité, suffisante pour élever le pH du mélange à une valeur de 4,4-4,8.

23. Procédé selon la revendication 20, 21 ou 22, caractérisé en ce qu'on réchauffe le mélange de lait décationisé et de lait non traité à une température de 30 à 35 °C pour coaguler le caillé.

24. Procédé selon la revendication 20 ou 21, caractérisé en ce que le rapport en volume entre la quantité de lait non traité et celle de lait décationisé est de 1 : 1.

25. Procédé selon la revendication 20 ou 21, caractérisé en ce que le lactosérum récupéré est neutralisé par un hydroxyde alcalin ou alcalino-terreux, puis concentré et finalement séché.

26. Caillé acide de lait obtenu par le procédé selon l'une des revendications 20 à 24.

27. Fromage sans présure préparé à partir du caillé selon la revendications 20 à 25.

28. Lactosérum obtenu par le procédé selon l'une des revendications 20 à 25.

29. Lait décationisé obtenu par le procédé selon l'une des revendications 2 à 8.

30. Laits acidifiés obtenus par le procédé selon la revendication 9.

**Revendications** (pour l'Etat contractant AT)

1. Procédé pour la préparation du lait décationisé acidulé ayant un rapport Ca/P inférieur à 0,5 par traitement du lait au moyen d'une résine échangeuse de cations sous forme acide, caractérisé en ce qu'il comporte la mise en contact du lait avec la résine échangeuse de cations sous forme acide, à une température de 0 à 4 °C, pendant la durée nécessaire pour abaisser le pH dudit lait à une valeur inférieure ou égale à 3,8, suivie de la séparation du lait décationisé ainsi obtenu qui contient les mêmes teneurs en matières protéiques et en lactose que celles du lait ordinaire, et une teneur en éléments minéraux inférieure à 4 g/litre de la résine échangeuse.

2. Procédé selon la revendication 1, caractérisé en ce que la mise en contact du lait avec la résine échangeuse de cations est effectuée pendant la durée nécessaire pour abaisser le pH dudit lait à un pH de 1,5 à 3,5.

3. Procédé selon la revendication 1 ou 2, caractérisé en ce que la résine est une résine échangeuse de cations fortement acide, à squelette polystyrénique portant des groupements acides sulfoniques, à structure de gel, ou à structure macroporeuse.

4. Procédé selon la revendication 1, caractérisé en ce que le rapport en volume du lait traité à la résine échangeuse est de 5 : 1 à 15 : 1.

5. Procédé selon la revendication 1, caractérisé en ce que la mise en contact se fait à une température de 0 à 2 °C.

6. Procédé selon la revendication 1, caractérisé en ce que le lait à traiter est du lait écrémé.

7. Procédé selon la revendication 1, caractérisé en ce que la mise en contact se fait sous agitation ou par percolation, ou à contre-courant.

8. Procédé d'utilisation du lait décationisé obtenu selon l'une quelconque des revendications 1 à 7, caractérisé en ce que l'on mélange ce lait décationisé acidulé avec le lait normal à traiter jusqu'à l'obtention du pH désiré.

9. Procédé d'utilisation du lait décationisé obtenu selon l'une quelconque des revendications 1 à 7, en vue de la préparation de la caséine et du lactosérum, caractérisé en ce qu'il comporte le mélange du lait décationisé avec une quantité de lait normal non traité, suffisante pour élever le pH du mélange jusqu'au voisinage du point isoélectrique de la caséine du lait, suivi du réchauffage du mélange ainsi obtenu à une température de 10 à 60 °C, pour coaguler la caséine contenue à la fois dans le lait traité et dans le lait non traité et de la récupération de la caséine ainsi coagulée et du lactosérum ainsi obtenu.

10. Procédé selon la revendication 9, caractérisé en ce que le lait décationisé est mélangé avec une quantité de lait normal non traité, suffisante pour élever le ph du mélange à une valeur de 4,4-4,6.

11. Procédé selon la revendication 9 ou 10, caractérisé en ce que l'on réchauffe le mélange de lait décationisé et de lait non traité à une température de 40 à 50 °C pour coaguler la caséine.

12. Procédé selon la revendication 9 ou 10, caractérisé en ce que le rapport en volume entre la quantité de lait non traité et celle de lait décationisé est de 1 : 1.

13. Procédé selon la revendication 9, caractérisé en ce que la caséine récupérée est lavée à l'eau, essorée puis séchée.

14. Procédé selon la revendication 9, caractérisé en ce que la caséine récupérée est lavée à l'eau, essorée, puis remise en suspension dans de l'eau chaude, de préférence à 75 °C et transformée en caséinate alcalin ou alcalino-terreux ou d'ammonium puis séchée.

15. Procédé selon la revendication 9, caractérisé en ce que le lactosérum récupéré est neutralisé par un hydroxyde alcalin ou alcalino-terreux, puis concentré et finalement séché.

16. Procédé d'utilisation du lait décationisé obtenu selon l'une quelconque des revendications 1 à 7, en vue de la préparation du caillé acide pour fromages sans présure et du lactosérum, caractérisé en ce qu'il comporte :

— le mélange du lait décationisé avec du lait normal non traité, en quantité suffisante pour élever le pH du mélange jusqu'au voisinage du point isoélectrique de la caséine du lait,

— le réchauffage du mélange ainsi obtenu à une température de 10 à 60 °C, pour coaguler sous forme de caillé la caséine contenue à la fois dans le lait décationisé acidulé, et dans le lait non traité, et puis,

— le découpage du caillé formé, sa cuisson à une température comprise entre 48 et 60 °C, le soutirage du lactosérum et sa récupération, le lavage du caillé à l'eau froide et l'égouttage dudit caillé.

17. Procédé selon la revendication 16, caractérisé en ce que le lait normal non traité a été préalablement refroidi à une température de 0 à 4 °C.

18. Procédé selon la revendication 16 ou 17, caractérisé en ce que le lait décationisé est mélangé avec une quantité de lait normal non traité, suffisante pour élever le pH du mélange à une valeur de 4,4-4,8.

19. Procédé selon la revendication 16, 17 ou 18, caractérisé en ce qu'on réchauffe le mélange de lait décationisé et de lait non traité à une température de 30 à 35 °C pour coaguler le caillé.

20. Procédé selon la revendication 16 ou 17, caractérisé en ce que le rapport en volume entre la quantité de lait non traité et celle de lait décationisé est de 1 : 1.

21. Procédé selon la revendication 16 ou 17, caractérisé en ce que le lactosérum récupéré est neutralisé par un hydroxyde alcalin ou alcalino-terreux, puis concentré et finalement séché.

**Claims** (for the Contracting States : BE, CH, DE, GB, IT, LI, NL, SE)

1. Acidulated decationized milk, with a Ca/P ratio less than 0.5, characterized in that it has the same protein and lactose content as ordinary milk, and a mineral substances content less than 4 g/litre, and a pH less than or equal to 3.8.

2. Process for the treatment of milk using a cation-exchanging resin in acid form for preparing the decationized milk according to claim 1, characterized in that it consists in placing the milk in contact with the cation-exchanging resin in acid form, at a temperature of between 0 and 4 °C, for the period necessary to lower the pH of the said milk down to a value below or equal to 3.8, and separating the decationized milk obtained this way from the exchanging resin.

3. Process according to claim 2, characterized in that the milk is placed in contact with the cation-exchanging resin for the period necessary to lower the pH of the said milk to between 1.5 and 3.5.

4. Process according to claim 2 or 3, characterized in that the resin is a strongly acid cation-exchanging resin, with polystyrene skeleton carrying sulfonic acid groups, with a gel or macroporous structure.

5. Process according to claim 2, characterized in that the volume ratio of the treated milk to the exchanging resin is between 5 : 1 and 15 : 1.

6. Process according to claim 2, characterized in that the milk is placed in contact with the cation-exchanging resin at a temperature of between 0 and 2 °C.

7. Process according to claim 2, characterized in that the milk to be treated is skim milk.

8. Process according to claim 2, characterized in that the milk is placed in contact with the exchanging resin under stirring or by percolation, or at counter-current.

9. Process for utilizing the decationized milk according to claim 1, to acidify ordinary milk, characterized in that the said acidulated decationized milk is mixed with the ordinary milk to be treated until the required pH is reached.

10. Process for utilizing the decationized milk according to claim 1, for preparing casein and lactoserum, characterized in that it comprises mixing the decationized milk with a quantity of non-treated ordinary milk, sufficient to raise the pH of the mixture to around the isoelectric point of the milk casein, and heating the resulting mixture to a temperature of between 10 and 60 °C, to coagulate the casein contained both in the treated milk and in the non-treated milk, and extracting the coagulated casein and the lactoserum obtained this way.

11. Process according to claim 10, characterized in that the decationized milk is mixed with enough non-treated ordinary milk, to raise the pH of the mixture to between 4.4 and 4.6.

12. Process according to claim 10 or 11, characterized in that the mixture of decationized milk and of non-treated milk is heated to between 40 and 50 °C to coagulate the casein.

13. Process according to claims 10 or 11, characterized in that the volume ratio between the quantity of non-treated milk and that of decationized milk is 1 : 1.

14. Process according to claim 10, characterized in that the extracted casein is washed in water, drained and then dried.

15. Process according to claim 10, characterized in that the extracted casein is washed in water, drained, and replaced in suspension in hot water, at preferably 75 °C and converted into alkaline or alkaline-earth or ammonium caseinate, and then dried.

16. Process according to claim 10, characterized in that the extracted lactoserum is neutralized by an alkaline or alkaline-earth hydroxide, and then concentrated and dried.

17. Milk casein obtained by the process according to any one of claims 10 to 15.

18. Lactoserum obtained by the process according to one of claims 10 to 13 and 16.

19. Lactoserum characterized in that it presents a reduced mineral content, a low chloride content comparatively from the serum obtained from conventional manufacture and the following mineral elements ratios Ca/P < 1 ; K/P < 1.3 and P/Cl ⩾ 0.6.

20. Process for utilizing the decationized milk according to claim 1, to prepare acid curds for making cheese without rennet, and lactoserum characterized in that it comprises
— mixing the decationized milk with non-treated normal milk, in sufficient quantity to raise the pH of the mixture to around the isoelectric point of the milk casein ;
— heating the resulting mixture to a temperature of between 10 and 60 °C to coagulate into curd the casein contained both in the acidulated decationized milk, and in the non-treated milk, and
— cutting the curd which has formed, and baking it at a temperature of between 48 and 60 °C, and extracting the lactoserum, washing the curd in cold water and draining it.

21. Process according to claim 20, characterized in that the non-treated ordinary milk is cooled down beforehand to a temperature of between 0 and 4 °C.

22. Process according to claim 20 or 21, characterized in that the decationized milk is mixed with enough non-treated ordinary milk to raise the pH of the mixture to a value of 4.4 to 4.8.

23. Process according to claim 20, 21 or 22, characterized in that the mixture of decationized milk and non-treated milk is heated to a temperature of between 30 and 35 °C to coagulate the curd.

24. Process according to claim 20 or 21, characterized in that the volume ratio between the quantity of non-treated milk and the quantity of decationized milk is 1 : 1.

25. Process according to claim 20 or 21, characterized in that the lactoserum extracted is neutralized by an alkaline or alkaline-earth hydroxide and concentrated and dried.

26. Milk acid curd obtained by the process according to any one of claims 20 to 24.

27. Cheese without rennet prepared from the curd according to claim 26.

28. Lactoserum obtained by the process according to claims 20 to 25.

29. Decationized milk obtained by the process according to any one of claims 2 to 8.

30. Acidified milks obtained by the process according to claim 9.


**Claims** (for the Contracting State AT)

1. Process for preparing acidulated decationized milk with a Ca/P ratio less than 0.5 by treatment of milk using a cation-exchanging resin in acid form, characterized in that it consists in placing the milk in contact with the cation-exchanging resin in acid form, at a temperature of between 0 and 4 °C, for the period necessary to lower the pH of the said milk down to a value below or equal to 3.8, and separating the decationized milk obtained this way, and having the same protein and lactose content as ordinary milk and a mineral substances content less than 4 g/litre, from the exchanging resin.

2. Process according to claim 1, characterized in that the milk is placed in contact with the cation-exchanging resin for the period necessary to lower the pH of the said milk to between 1.5 and 3.5.

3. Process according to claim 1 or 2, characterized in that the resin is a strongly acid cation-exchanging resin, with polystyrene skeleton carrying sulfonic acid groups, with a gel or macroporous structure.

4. Process according to claim 1, characterized in that the volume ratio of the treated milk to the exchanging resin is between 5 : 1 and 15 : 1.

5. Process according to claim 1, characterized in that the milk is placed in contact with the cation-exchanging resin at a temperature of between 0 and 2 °C.

6. Process according to claim 1, characterized in that the milk to be treated is skim milk.

7. Process according to claim 1, characterized in that the milk is placed in contact with the exchanging resin under stirring or by percolation, or at counter-current.

8. Process for utilizing the decationized milk obtained according to anyone of claims 1 to 7, characterized in that the said acidulated decationized milk is mixed with the ordinary milk to be treated until the required pH is reached.

9. Process for utilizing the decationized milk obtained according to anyone of claims 1 or 7, for preparing casein and lactoserum, characterized in that it comprises mixing the decationized milk with a quantity of non-treated ordinary milk, sufficient to raise the pH of the mixture to around the isoelectric point of the milk casein, and heating the resulting mixture to a temperature of between 10 and 60 °C, to coagulate the casein contained both in the treated milk and in the non-treated milk, and extracting the coagulated casein and the lactoserum obtained this way.

10. Process according to claim 9, characterized in that the decationized milk is mixed with enough non-treated ordinary milk, to raise the pH of the mixture to between 4.4 and 4.6.

11. Process according to claims 9 or 10, characterized in that the mixture of decationized milk and of non-treated milk is heated to between 40 and 50 °C to coagulate the casein.

12. Process according to claims 9 or 10, characterized in that the volume ratio between the quantity of non-treated milk and that of decationized milk is 1 : 1.

13. Process according to claim 9, characterized in that the extracted casein is washed in water, drained and then dried.

14. Process according to claim 9, characterized in that the extracted casein is washed in water, drained, and replaced in suspension in hot water, at preferably 75 °C, and converted into alkaline or alkaline-earth or ammonium caseinate, and then dried.

15. Process according to claim 9, characterized in that the extracted lactoserum is neutralized by an alkaline or alkaline-earth hydroxide, and then concentrated and dried.

16. Process for utilizing the decationized milk obtained according to anyone of claims 1 to 7, to prepare acid curds for making cheese without rennet, and lactoserum characterized in that it comprises :
— mixing the decationized milk with non-treated normal milk, in sufficient quantity to raise the pH of the mixture to around the isoelectric point of the milk casein,
— heating the resulting mixture to a temperature of between 10 and 60 °C to coagulate into curd the casein contained both in the acidulated decationized milk, and in the non-treated milk, and,
— cutting the curd which has formed, and baking it at a temperature of between 48 and 60 °C, and extracting the lactoserum, washing the curd in cold water and draining it.

17. Process according to claim 16, characterized in that the non-treated ordinary milk is cooled down beforehand to a temperature of between 0 and 4 °C.

18. Process according to claim 16 or 17, characterized in that the decationized milk is mixed with enough non-treated ordinary milk to raise the pH of the mixture to a value of 4.4 to 4.8.

19. Process according to claim 16, 17 or 18, characterized in that the mixture of decationized milk and non-treated milk is heated to a temperature of between 30 and 35 °C to coagulate the curd.

20. Process according to claim 16 or 17, characterized in that the volume ratio between the quantity of non-treated milk and the quantity of decationized milk is 1 : 1.

21. Process according to claim 16 or 17, characterized in that the lactoserum extracted is neutralized by an alkaline or alkaline earth hydroxide and concentrated and dried.

**Ansprüche** (für die Vertragsstaaten : BE, CH, DE, GB, IT, LI, NL, SE)

1. Entkationisierte, angesäuerte Milch mit einem Ca/P-Verhältnis von weniger als 0,5, dadurch gekennzeichnet, daß sie dieselben Gehalte an Eiweißstoffen und Lactose wie gewöhnliche Milch, einen Gehalt an Mineralstoffen von weniger als 4 g/l und einen pH-Wert von weniger oder gleich 3,8 aufweist.

2. Verfahren zur Behandlung von Milch mittels eines Kationenaustauscherharzes in saurer Form zur Herstellung der entkationisierten Milch nach Anspruch 1, dadurch gekennzeichnet, daß Milch mit Kationenaustauscherharz in saurer Form bei einer Temperatur von 0 bis 4 °C während des zum Absenken des pH der Milch auf einen Wert von weniger oder gleich 3,8 notwendigen Zeitraums in Kontakt gebracht wird und die so erhaltene entkationisierte Milch vom Austauscherharz abgetrennt wird.

3. Verfahren nach Anspruch 2, dadurch gekennzeichnet, daß die Milch mit dem Kationenaustauscherharz während des zum Absenken des pH der Milch auf einen pH-Wert von 1,5 bis 3,5 notwendigen Zeitraumes in Kontakt gebracht wird.

4. Verfahren nach Anspruch 2 oder 3, dadurch gekennzeichnet, daß das Harz ein stark saures Kationenaustauscherharz mit Sulfonsäuregruppen tragendem Polystyrolskelett, Gelstruktur oder makroporöser Struktur ist.

5. Verfahren nach Anspruch 2, dadurch gekennzeichnet, daß das Volumsverhältnis der behandelten Milch zum Austauscherharz 5 : 1 bis 15 : 1 beträgt.

6. Verfahren nach Anspruch 2, dadurch gekennzeichnet, daß der Kontakt bei einer Temperatur von 0 bis 2 °C erfolgt.

7. Verfahren nach Anspruch 2, dadurch gekennzeichnet, daß die zu behandelnde Milch entrahmte Milch ist.

8. Verfahren nach Anspruch 2, dadurch gekennzeichnet, daß der Kontakt unter Rühren oder durch Perkolieren oder im Gegenstrom erfolgt.

9. Verfahren zur Verwendung der entkationisierten Milch nach Anspruch 1 zur Ansäuerung von

14

normaler Milch, dadurch gekennzeichnet, daß diese entkationisierte, gesäuerte Milch mit der zu behandelnden normalen Milch bis zur Erzielung des gewünschten pH-Wertes gemischt wird.

10. Verfahren zur Verwendung der entkationisierten Milch nach Anspruch 1 zur Herstellung von Kasein und Milchserum, dadurch gekennzeichnet, daß entkationisierte Milch mit einer Menge normaler, unbehandelter Milch, die für eine Erhöhung des ph der Mischung bis in die Nähe des isoelektrischen Punktes des Kaseins der Milch ausreicht, vermischt wird, die so erhaltene Mischung auf eine Temperatur von 10 bis 60 °C zum Koagulieren des sowohl in der behandelten als auch in der nicht behandelten Milch enthaltenen Kaseins sodann erhitzt wird und das so koagulierte Kasein und das so erhaltene Milchserum gewonnen werden.

11. Verfahren nach Anspruch 10, dadurch gekennzeichnet, daß die entkationisierte Milch mit einer Menge an normaler, nicht behandelter Milch, die für eine Erhöhung des pH der Mischung auf einen Wert von 4,4 bis 4,6 ausreicht, vermischt wird.

12. Verfahren nach Anspruch 10 oder 11, dadurch gekennzeichnet, daß die Mischung der entkationisierten Milch und der unbehandelten Milch auf eine Temperatur von 40 bis 50 °C zum Koagulieren des Kaseins erhitzt wird.

13. Verfahren nach Anspruch 10 oder 11, dadurch gekennzeichnet, daß das Volumsverhältnis der Menge an nicht behandelter Milch zur Menge an entkationisierter Milch 1 : 1 ist.

14. Verfahren nach Anspruch 10, dadurch gekennzeichnet, daß das gewonnene Kasein mit Wasser gewaschen, geschleudert und getrocknet wird.

15. Verfahren nach Anspruch 10, dadurch gekennzeichnet, daß das gewonnene Kasein mit Wasser gewaschen, geschleudert, dann in heißem Wasser, vorzugsweise bei 75 °C, in Suspension gebracht und in Alkali- oder Erdalkali- oder Ammoniumkaseinat übergeführt und sodann getrocknet wird.

16. Verfahren nach Anspruch 10, dadurch gekennzeichnet, daß das gewonnene Milchserum mit einem Alkali- oder Erdalkalihydroxid neutralisiert, dann konzentriert und schließlich getrocknet wird.

17. Milchkasein, erhalten durch das Verfahren nach einem der Ansprüche 10 bis 15.

18. Milchserum, erhalten durch das Verfahren nach einem der Ansprüche 10 bis 13 und 16.

19. Milchserum, dadurch gekennzeichnet, daß es im Vergleich zu einem durch herkömmliche Herstellung erhaltenen Serum einen reduzierten Gehalt an Mineralstoffen und einen geringen Gehalt an Chloriden aufweist und daß die Verhältnisse der Mineralstoffe folgendermaßen sind : $Ca/P < 1$ ; $K/P < 1,3$ und $P/Cl \geqq 0,6$.

20. Verfahren zur Verwendung der entkationisierten Milch nach Anspruch 1 zur Herstellung von saurem Geronnenem für Käse ohne Labferment und von Milchserum, dadurch gekennzeichnet, daß
— entkationisierte Milch mit normaler, nichtbehandelter Milch in einer Menge vermischt wird, die zur Erhöhung des ph der Mischung bis nahe zum isoelektrischen Punkt des Kaseins der Milch ausreicht,
— die so erhaltene Mischung auf eine Temperatur von 10 bis 60 °C zum Koagulieren des sowohl in der entkationisierten, gesäuerten Milch als auch in der unbehandelten Milch enthaltenem Kaseins in Form von Geronnenem erhitzt wird,
— danach das gebildete Geronnene abgetrennt und auf eine Temperatur zwischen 48 und 60 °C erhitzt wird, das Milchserum abgezogen und gewonnen wird, das Geronnene in kaltem Wasser gewaschen und entwässert wird.

21. Verfahren nach Anspruch 20, dadurch gekennzeichnet, daß die normale, unbehandelte Milch zuvor auf eine Temperatur von 0 bis 4 °C gekühlt wurde.

22. Verfahren nach Anspruch 20 oder 21, dadurch gekennzeichnet, daß die entkationisierte Milch mit einer Menge an normaler, unbehandelter Milch, die zur Erhöhung des pH des Mischung auf einen Wert von 4,4 bis 4,8 ausreicht, vermischt wird.

23. Verfahren nach Anspruch 20, 21 oder 22, dadurch gekennzeichnet, daß die Mischung aus entkationisierter Milch und unbehandelter Milch auf eine Temperatur von 30 bis 35 °C zum Koagulieren des Geronnenen erhitzt wird.

24. Verfahren nach Anspruch 20 oder 21, dadurch gekennzeichnet, daß das Volumsverhältnis der Menge an unbehandelter Milch zu der an entkationisierter Milch 1 : 1 beträgt.

25. Verfahren nach Anspruch 20 oder 21, dadurch gekennzeichnet, daß das gewonnene Milchserum mit einem Alkali- oder Erdalkalihydroxid neutralisiert, dann konzentriert und schließlich getrocknet wird.

26. Saures Geronnenes von Milch, erhalten durch das Verfahren nach einem der Ansprüche 20 bis 24.

27. Labfreier Käse, hergestellt aus dem Geronnenen nach Anspruch 26.

28. Milchserum, erhalten durch das Verfahren nach einem der Ansprüche 20 bis 25.

29. Entkationisierte Milch, erhalten durch das Verfahren nach einem der Ansprüche 2 bis 8.

30. Angesäuerte Milch, erhalten durch das Verfahren nach Anspruch 9.

**Ansprüche** (für den Vertragsstaat AT)

1. Verfahren zur herstellung von entkationisierter, angesäuerter Milch mit einem Ca/P-Verhältnis von weniger als 0,5 durch Behandlung von Milch mittels eines Kationenaustauscherharzes in saurer Form, dadurch gekennzeichnet, daß Milch mit Kationenaustauscherharz in saurer Form bei einer Temperatur von 0 bis 4 °C während des zum Absenken des pH der Milch auf einen Wert von weniger oder gleich 3,8 notwendigen Zeitraumes in Kontakt gebracht wird und die so erhaltene entkationisierte Milch mit denselben Gehalten an Eiweißstoffen und Lactose wie gewöhnliche Milch sowie mit einem Gehalt an Mineralstoffen von weniger als 4 g/l vom Austauscherharz abgetrennt wird.

2. Verfahren nach Anspruch 1, dadurch gekennzeichnet, daß die Milch mit dem Kationenaustauscherharz während des zum Absenken des pH der Milch auf einen pH-Wert von 1,5 bis 3,5 notwendigen Zeitraumes in Kontakt gebracht wird.

3. Verfahren nach Anspruch 1 oder 2, dadurch gekennzeichnet, daß das Harz ein stark saures Kationenaustauscherharz mit Sulfonsäuregruppen tragendem Polystyrolskelett, Gelstruktur oder makroporöser Struktur ist.

4. Verfahren nach Anspruch 1, dadurch gekennzeichnet, daß das Volumsverhältnis der behandelten Milch zum Austauscherharz 5 : 1 bis 15 : 1 beträgt.

5. Verfahren nach Anspruch 1, dadurch gekennzeichnet, daß der Kontakt bei einer Temperatur von 0 bis 2 °C erfolgt.

6. Verfahren nach Anspruch 1, dadurch gekennzeichnet, daß die zu behandelnde Milch entrahmte Milch ist.

7. Verfahren nach Anspruch 1, dadurch gekennzeichnet, daß der Kontakt unter Rühren oder durch Perkolieren oder im Gegenstrom erfolgt.

8. Verfahren zur Verwendung der nach einem der Ansprüche 1 bis 7 hergestellten entkationisierten Milch zur Ansäuerung von normaler Milch, dadurch gekennzeichnet, daß diese entkationisierte, gesäuerte Milch mit der zu behandelnden normalen Milch bis zur Erzielung des gewünschten pH-Wertes gemischt wird.

9. Verfahren zur Verwendung der nach einem der Ansprüche 1 bis 7 hergestellten entkationisierten Milch zur Herstellung von Kasein und Milchserum, dadurch gekennzeichnet, daß entkationisierte Milch mit einer menge normaler, unbehandelter Milch, die für eine Erhöhung des pH-Wertes der Mischung bis in die Nähe des isoelektrischen Punktes des Kaseins der Milch ausreicht, vermischt wird, die so erhaltene Mischung auf eine Temperatur von 10 bis 60 °C zum Koagulieren des sowohl in der behandelten als auch in der nicht behandelten Milch enthaltenen Kaseins sodann erhitzt wird und das so koagulierte Kasein und das so erhaltene Milchserum gewonnen werden, welch letzteres einen im Vergleich zu einem durch herkömmliche Herstellung erhaltenen Serum reduzierten Gehalt an Mineralstoffen und einen geringen Gehalt an Chloriden aufweist, wobei die Verhältnisse der Mineralstoffe folgendermaßen sind : Ca/P $< 1$ ; K/P $< 1,3$ und P/Cl $\geqslant 0,6$.

10. Verfahren nach Anspruch 9, dadurch gekennzeichnet, daß die entkationisierte Milch mit einer Menge an normaler, nicht behandelter Milch, die für eine Erhöhung des pH der Mischung auf einen Wert von 4,4 bis 4,6 ausreicht, vermischt wird.

11. Verfahren nach Anspruch 9 und 10, dadurch gekennzeichnet, daß die Mischung der entkationisierten Milch und der unbehandelten Milch auf eine Temperatur von 40 bis 50 °C zum Koagulieren des Kaseins erhitzt wird.

12. Verfahren nach Anspruch 9 oder 10, dadurch gekennzeichnet, daß das Volumsverhältnis der Menge an nicht behandelter Milch zur Menge an entkationisierter Milch 1 : 1 ist.

13. Verfahren nach Anspruch 9, dadurch gekennzeichnet, daß das gewonnene Kasein mit Wasser gewaschen, geschleudert und getrocknet wird.

14. Verfahren nach Anspruch 9, dadurch gekennzeichnet, daß das gewonnene Kasein mit Wasser gewaschen, geschleudert, dann in heißem Wasser, vorzugsweise bei 75 °C, in Suspension gebracht und in Alkali- oder Erdalkali- oder Ammoniumkaseinat übergeführt und sodann getrocknet wird.

15. Verfahren nach Anspruch 9, dadurch gekennzeichnet, daß das gewonnene Milchserum mit einem Alkali- oder Erdalkalihydroxid neutralisiert, dann konzentriert und schließlich getrocknet wird.

16. Verfahren zur Verwendung der nach einem der Ansprüche 1 bis 7 hergestellten entkationisierten Milch zur Herstellung von saurem Geronnenem für Käse ohne Labferment und von Milchserum, dadurch gekennzeichnet, daß

— entkationisierte Milch mit normaler, nichtbehandelter Milch in einer Menge vermischt wird, die zur Erhöhung des pH-Wertes der Mischung bis nahe zum isoelektrischen Punkt des Kaseins der Milch ausreicht,

— die so erhaltene Mischung auf eine Temperatur von 10 bis 60 °C zum Koagulieren des sowohl in der entkationisierten, gesäuerten Milch als auch in der unbehandelten Milch enthaltenen Kaseins in Form von Geronnenem erhitzt wird,

— danach das gebildete Geronnene abgetrennt und auf eine Temperatur zwischen 48 und 60 °C erhitzt wird, das Milchserum abgezogen und gewonnen wird, das Geronnene in kaltem Wasser gewaschen und entwässert wird.

17. Verfahren nach Anspruch 16, dadurch gekennzeichnet, daß die normale, unbehandelte Milch zuvor auf eine Temperatur von 0 bis 4 °C gekühlt wurde.

18. Verfahren nach Anspruch 16 oder 17, dadurch gekennzeichnet, daß die entkationisierte Milch mit einer Menge an normaler, unbehandelter Milch, die zur Erhöhung des pH der Mischung auf einen Wert von 4,4 bis 4,8 ausreicht, vermischt wird.

19. Verfahren nach Anspruch 16, 17 oder 18, dadurch gekennzeichnet, daß die Mischung aus entkationisierter Milch und unbehandelter Milch auf eine Temperatur von 30 bis 35 °C zum Koagulieren des Geronnenen erhitzt wird.

20. Verfahren nach Anspruch 16 oder 17, dadurch gekennzeichnet, daß das Volumsverhältnis der Menge an unbehandelter Milch zu der an entkationisierter Milch 1 : 1 beträgt.

21. Verfahren nach Anspruch 16 oder 17, dadurch gekennzeichnet, daß das gewonnene Milchserum mit einem Alkali- oder Erdalkalihydroxid neutralisiert, dann konzentriert und schließlich getrocknet wird.